# DEMANDE DE BREVET EUROPEEN

(11) **EP 0 926 424 A1**
(43) Date de publication de la demande: **30.06.1999**
(21) Numéro de dépôt: 98460055.1
(22) Date de dépôt: 08.12.1998
(51) Int. Cl.: F16L 41/03

(54) **Conduit distributeur ou collecteur de fluide, procédé de fabrication dudit conduit et assemblage de raccordement comportant ledit conduit**

(30) Priorité: 19.12.1997 FR 9716546
(71) Demandeur: Alexandre, Jean-Noel, 49130 St. Gemmes sur Loire (FR)
(72) Inventeur: Alexandre, Jean-Noel, 49130 St. Gemmes sur Loire (FR)
(74) Mandataire: Maillet, Alain

(57) **Abrégé**

La présente invention concerne un conduit distributeur ou collecteur de fluide comportant des tubulures de raccordement, un procédé de fabrication dudit conduit et un assemblage de raccordement comportant ledit conduit.

Un conduit (1) selon l'invention est constitué d'un corps principal (2) et de tubulures transversales de raccordement (6) qui sont externes par rapport audit corps principal (2), ledit corps (2) comportant des ouvertures (2a) prévues pour le faire communiquer avec lesdites tubulures (6).

Ledit conduit (1) est tel que chacune desdites tubulures (6) présente sur sa face externe des nervures (7) radiales, parallèles et espacées qui sont prévues pour permettre, en vue d'un raccordement, le montage par sertissage d'une bague d'étanchéité sur ladite tubulure (6).

L'invention s'applique notamment à une installation de chauffage ou de plomberie.

## Description

La présente invention concerne un conduit distributeur ou collecteur de fluide comportant des tubulures de raccordement, un procédé de fabrication dudit conduit et un assemblage de raccordement comportant ledit conduit. L'invention s'applique notamment à une installation de chauffage ou de plomberie.

On connaît divers types de conduits de fluide, tels que des conduits d'eau pour le chauffage, lesquels sont prévus pour recevoir des conduits d'embranchement transversaux par l'intermédiaire de raccords.

Le document de brevet français FR-A-2 731 768 décrit de tels raccords qui sont respectivement prévus pour être montés d'une manière radiale par rapport à un conduit principal, par vissage sur les bords filetés d'ouvertures transversales dudit conduit principal. Ce dernier est réalisé en matière plastique, alors que lesdits raccords sont constitués de manchons filetés en métal inoxydable.

En vue de procéder au montage d'un conduit d'embranchement sur ledit conduit principal, on visse un raccord sur l'un desdits bords filetés, on monte un joint d'étanchéité sur la face interne du bord libre dudit raccord, puis on visse un écrou sur le filetage externe adjacent dudit raccord. On fixe ensuite ledit conduit d'embranchement à l'intérieur dudit écrou et contre ledit joint.

Un inconvénient majeur de ce conduit principal réside notamment dans la complexité de sa structure et dans les contraintes imposées par l'opération de vissage des raccords sur lesdits bords dudit conduit, avant la fixation des conduits d'embranchement sur lesdits raccords.

Le document de brevet français FR-A-2 222 614 décrit un conduit métallique pour une installation de chauffage, qui comporte quatre tubulures de raccordement. Ce conduit est obtenu par un procédé de coulage sous pression.

Ce conduit est destiné à être vissé sur la conduite de sortie d'un premier radiateur en l'une de ses extrémités qui est ouverte, alors que son autre extrémité est fermée et est constituée par deux tubulures transversalement opposées. L'une de ces deux tubulures est prévue pour recevoir une vanne, alors que l'autre est prévue pour recevoir, par l'intermédiaire d'un filetage interne, une conduite d'embranchement relié à un second radiateur.

Ledit conduit comporte deux autres tubulures transversalement opposées qui sont adjacentes à ladite extrémité ouverte. L'une de ces deux tubulures est destinée à recevoir une conduite d'eau chaude dudit premier radiateur par l'intermédiaire d'un filetage interne, alors que l'autre tubulure est destinée à être reliée à une conduite d'entrée dudit premier radiateur par l'intermédiaire d'un filetage externe. De plus, cette dernière tubulure est prévue pour recevoir l'eau chaude de la précédente par l'intermédiaire d'un manchon transversal de guidage communiquant avec ces deux tubulures.

On effectue le montage de ladite conduite d'entrée du radiateur sur ladite tubulure à filetage externe par l'intermédiaire d'un écrou pourvu d'un joint d'étanchéité, que l'on visse sur ledit filetage.

Un inconvénient majeur de ce conduit réside dans la complexité de sa structure à tubulures filetées et, par conséquent, dans le coût inhérent à sa fabrication.

Un but de la présente invention est de proposer un conduit distributeur ou collecteur de fluide constitué d'un corps principal et de tubulures transversales de raccordement qui sont externes par rapport audit corps principal, ledit corps comportant des ouvertures prévues pour le faire communiquer avec lesdites tubulures, qui présente à la fois des caractéristiques de fonctionnement satisfaisantes et une structure simple

Un autre but de la présente invention est de proposer un procédé de fabrication d'un tel conduit qui implique un coût réduit, et un assemblage de raccordement comportant ledit conduit qui puisse être mis en place commodément.

A cet effet, un conduit de fluide selon l'invention est tel que chacune desdites tubulures présente sur sa face externe des nervures radiales, parallèles et espacées qui sont prévues pour permettre, en vue d'un raccordement, le montage par sertissage d'une bague d'étanchéité sur ladite tubulure.

Selon un exemple de réalisation de l'invention, chacune desdites tubulures présente sur sa face externe quatre nervures radiales.

Selon une autre caractéristique de l'invention, ledit corps principal est prévu pour être relié, par ses extrémités respectives, à des conduites d'entrée et de sortie pour ledit fluide. Dans ce cas, chacune desdites extrémités dudit corps principal est prévue filetée.

Selon une variante de réalisation de l'invention, chacune des deux extrémités dudit corps principal peut être prévue bouchée, ou bien une extrémité peut être prévue filetée et l'autre bouchée.

Un procédé de fabrication selon l'invention dudit conduit de fluide consiste à obtenir ledit corps principal par moulage d'une matière métallique, telle que du laiton, à souder lesdites tubulures sur les bords respectifs desdites ouvertures, lesdites nervures étant formées sur chaque tubulure par décolletage.

Selon une autre caractéristique dudit procédé, celui-ci consiste à souder lesdites tubulures sur les bords desdites ouvertures au moyen d'un brasage à l'argent.

Un assemblage de raccordement selon l'invention est du type comportant ledit conduit distributeur ou collecteur de fluide, et il est tel qu'il comporte des bagues respectivement prévues pour recevoir des conduits d'embranchement transversaux par rapport audit corps principal, chaque bague étant montée par sertissage sur lesdites nervures de chacune desdites tubulures.

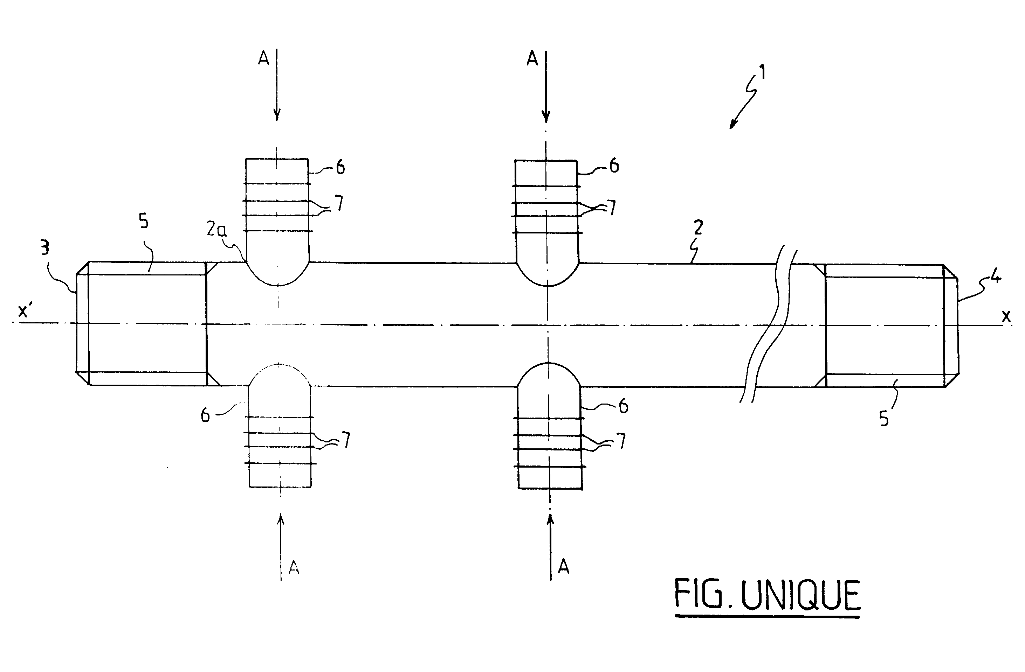

Les caractéristiques de l'invention mentionnées ci-dessus, ainsi que d'autres, apparaîtront plus clairement à la lecture de la description suivante d'un exemple de réalisation, ladite description étant faite en relation avec le dessin joint, dans lequel:

la Fig. unique est une vue en coupe longitudinale d'un conduit distributeur ou collecteur de fluide selon l'invention.

Un conduit 1 distributeur ou collecteur de fluide selon l'invention comporte un corps cylindrique principal 2 d'axe X'X qui est par exemple destiné à être relié, par ses extrémités respectives 3 et 4, à des conduites d'entrée et de sortie (non représentées) pour ledit fluide. A cet effet, chaque extrémité 3, 4 comporte par exemple un filetage 5 pour son vissage sur ladite canalisation correspondante.

Cependant, le corps principal 2 pourrait être bouché en chacune de ses extrémités 3 et 4, ou bien fileté en une extrémité 3 et bouché en son autre extrémité 4, sans sortir du cadre de la présente invention.

Le conduit 1 comporte également des tubulures de raccordement externes 6 qui sont prévues dans des plans transversaux par rapport audit corps principal 2, par exemple à intervalles réguliers le long dudit axe X'X.

Dans l'exemple de réalisation de la Fig. unique, le conduit 1 comporte une paire de tubulures 6 diamétralement opposées dans chaque plan radial de raccordement. Cependant, on notera que chaque plan de raccordement pourrait comporter un nombre supérieur ou inférieur de tubulures 6.

Chaque tubulure de raccordement 6 présente des nervures radiales 7 parallèles et espacées sur sa face externe, sur lesquelles une bague d'étanchéité est prévue pour être montée par sertissage pour le raccordement étanche d'un conduit d'embranchement à l'intérieur de ladite tubulure 6 (ladite bague et ledit conduit d'embranchement ne sont pas représentés). Des flèches A illustrent le positionnement desdites bagues sur lesdites tubulures nervurées 6 en vue de leur sertissage.

Dans cet exemple de réalisation, chaque tubulure 6 comporte quatre nervures radiales 7.

Selon une caractéristique de l'invention, le corps principal 2 est obtenu par un procédé de moulage d'un métal inoxydable, tel que du laiton, et il présente des ouvertures 2a qui sont prévues pour le faire communiquer avec les tubulures 6. Quant auxdites tubulures 6, elles sont formées sur ledit corps 2 par soudage sur les bords respectifs desdites ouvertures 2a, par exemple au moyen d'un brasage à l'argent.

De plus, on forme lesdites nervures 7 sur chaque tubulure 6 par décolletage.

Il résulte du procédé de sertissage précité, qui caractérise l'assemblage d'une bague d'étanchéité pour le raccordement d'un conduit d'embranchement sur chaque tubulure 6, que cet assemblage peut être réalisé aisément par l'opérateur et sans le moindre joint d'étanchéité.

Cette absence de joint et de raccord à visser implique un coût réduit pour ledit conduit 1, par rapport aux conduits connus.

Du fait de l'absence de vissage et de serrage à effectuer pour le montage de tubulures 6 sur le conduit principal 1, on peut diminuer l'intervalle de longueur entre deux tubulures 6 adjacentes. A titre indicatif, ledit intervalle de longueur peut être d'environ 30 mm sur un conduit 1 selon l'invention, au lieu des 40 à 50 mm prévus dans l'art antérieur.

Il en résulte un gain pour le débit de circulation du fluide de chauffage par unité de longueur de conduit 1, ou une plus grande compacité dudit conduit 1 à débit unitaire égal.

Des essais effectués sur un conduit 1 de diamètres interne et externe respectifs égaux à 18 et 24 mm avec des contraintes de pression interne voisines de 10 bars ont donné des résultats satisfaisants, tant pour un niveau de bruit réduit que pour l'étanchéité assurée pour lesdits conduits d'embranchement.

## Revendications

1. Conduit distributeur ou collecteur de fluide (1) constitué d'un corps principal (2) et de tubulures transversales de raccordement (6) qui sont externes par rapport audit corps principal (2), ledit corps (2) comportant des ouvertures (2a) prévues pour le faire communiquer avec lesdites tubulures (6), caractérisé en ce que chacune desdites tubulures (6) présente sur sa face externe des nervures (7) radiales, parallèles et espacées qui sont prévues pour permettre, en vue d'un raccordement, le montage par sertissage d'une bague d'étanchéité sur ladite tubulure (6).

2. Conduit de fluide (1) selon la revendication 1, caractérisé en ce que chacune desdites tubulures (6) présente sur sa face externe quatre nervures (7) radiales.

3. Conduit de fluide (1) selon la revendication 1 ou 2, caractérisé en ce que ledit corps principal (2) est prévu pour être relié, par ses extrémités respectives (3 et 4), à des conduites d'entrée et de sortie pour ledit fluide.

4. Conduit de fluide (1) selon la revendication 3, caractérisé en ce que chacune desdites extrémités (3, 4) dudit corps principal (2) est filetée.

5. Conduit de fluide (1) selon la revendication 1 ou 2, caractérisé en ce que chacune desdites extrémités (3, 4) dudit corps principal (2) est bouchée.

6. Conduit de fluide (1) selon la revendication 1 ou 2, caractérisé en ce que l'une desdites extrémités (3) dudit corps principal (2) est filetée, l'autre extrémité (4) étant bouchée.

7. Procédé de fabrication d'un conduit de fluide (1) selon une des revendications précécentes, caractérisé en ce qu'il consiste à obtenir ledit corps principal (2) par moulage d'une matière métallique, telle que du laiton, à souder lesdites tubulures (6) sur les bords respectifs desdites ouvertures (2a), lesdites nervures (7) étant formées sur chaque tubulure (6) par décolletage.

8. Procédé de fabrication d'un conduit distributeur ou collecteur de fluide (1) selon la revendication 7, caractérisé en ce qu'il consiste à souder lesdites tubulures (6) sur les bords desdites ouvertures (2a) au moyen d'un brasage à l'argent.

9. Assemblage de raccordement comportant un conduit distributeur ou collecteur de fluide (1) selon une des revendications 1 à 6, caractérisé en ce qu'il comporte des bagues d'étanchéité respectivement prévues pour recevoir des conduits d'embranchement transversaux par rapport audit corps principal (2), chaque bague étant montée par sertissage sur lesdites nervures (7) de chacune desdites tubulures (6).
